# EUROPEAN PATENT SPECIFICATION

(11) **EP 3 687 219 B1**
(45) Date of publication and mention of the grant of the patent: **10.01.2024**
(21) Application number: 18859071.5
(22) Date of filing: 13.09.2018
(51) Int. Cl.: H04W 28/16, H04W 36/00, H04W 36/08, H04W 76/10, H04W 76/12, H04W 88/08, H04W 36/06

(54) **COMMUNICATION METHOD UNDER WIRELESS BASE STATION SEPARATION ARCHITECTURE, FUNCTIONAL ENTITY AND WIRELESS BASE STATION**
KOMMUNIKATIONSVERFAHREN UNTER VERWENDUNG EINER DRAHTLOSEN BASISSTATIONSTRENNUNGSARCHITEKTUR, FUNKTIONSEINHEIT UND DRAHTLOSE BASISSTATION
PROCÉDÉ DE COMMUNICATION SOUS ARCHITECTURE DE SÉPARATION DE STATION DE BASE SANS FIL, ENTITÉ FONCTIONNELLE ET STATION DE BASE SANS FIL

(30) Priority: 22.09.2017 CN 201710867093
(43) Date of publication of application: 29.07.2020
(73) Proprietor: ZTE Corporation, Shenzhen, Guangdong 518057 (CN)
(72) Inventor: WU, Guodong, Shenzhen, Guangdong 518057 (CN); ZHOU, Qiang, Shenzhen, Guangdong 518057 (CN)
(74) Representative: Mozzi, Matteo
(86) International application number: PCT/CN2018/105516
(87) International publication number: WO 2019/056979

(56) References cited:
- CN-A- 101 175 026
- CN-A- 102 045 877
- CN-A- 102 204 338
- US-A- 6 038 223
- US-A1- 2016 278 110
- "3rd Generation Partnership Project; Technical Specification Group Radio Access Network; NG-RAN; Architecture description (Release 15)", 3GPP DRAFT; 38.401-011-RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 26 June 2017 (2017-06-26), XP051301973, Retrieved from the Internet: URL:http://www.3gpp.org/ftp/Meetings_3GPP_ SYNC/RAN3/Docs/ [retrieved on 2017-06-26]
- III: "Mobility Support for Full RRC Signalings", 3GPP DRAFT; R2-165294_MOBILITY_SUPPORT_FULL_RRC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Sweden; 20160822 - 20160826 21 August 2016 (2016-08-21), XP051126868, Retrieved from the Internet: URL:http://www.3gpp.org/ftp/Meetings_3GPP_ SYNC/RAN2/Docs/ [retrieved on 2016-08-21]
- NOKIA ET AL: "TP of Clean up for functional split", 3GPP DRAFT; R3-170416 TP OF CLEAN UP FOR FUNCTIONAL SPLIT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Athens, Greece; 20170213 - 20170217 12 February 2017 (2017-02-12), XP051213006, Retrieved from the Internet: URL:http://www.3gpp.org/ftp/Meetings_3GPP_ SYNC/RAN3/Docs/ [retrieved on 2017-02-12]
- ZTE: "The proposed Stage 2 TP for CU-DU interface", 3GPP DRAFT; R3-171017_ PROPOSED STAGE 2 TP FOR HLS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Spokane, USA; 20170403 - 20170407 3 April 2017 (2017-04-03), XP051245742, Retrieved from the Internet: URL:http://www.3gpp.org/ftp/Meetings_3GPP_ SYNC/RAN3/Docs/ [retrieved on 2017-04-03]
- ERICSSON: "Functional split between IAB node and other network nodes", 3GPP DRAFT; R3-181311 CU-DU SPLIT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Athens, Greece; 20180226 - 20180302 17 February 2018 (2018-02-17), XP051401755, Retrieved from the Internet: URL:http://www.3gpp.org/ftp/tsg%5Fran/WG3% 5FIu/TSGR3%5F99/Docs/ [retrieved on 2018-02-17]
- LG ELECTRONICS INC: "R3-173198, Issues on RRC-INACTIVE State in CU -DU Split", 3GPP TSG-RAN WG3 Meeting #97, 25 August 2017 (2017-08-25), XP051320029,

## Description

### Technical Field

The present disclosure relates to the field of wireless communications, in particular to a communication method under a wireless base station separation architecture, a functional entity and a wireless base station.

### Background

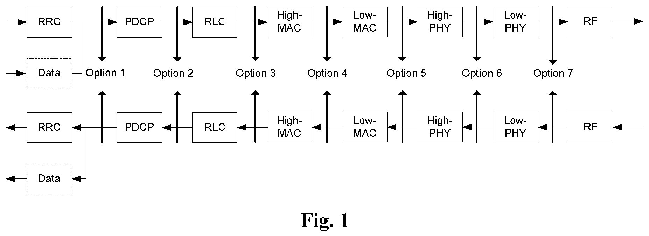

In a 3GPP standard, a GNB (a 5G base station) may be divided into two functional entities, namely a Centralized Unit (CU) and a Distributed Unit (DU). Fig. 1 is an exemplary splitting method of protocol stacks between the CU and the DU in related art. In Fig. 1, Radio Resource Control (RRC) is a RRC protocol stack of an air interface, a Packet Data Convergence Protocol (PDCP) layer is a data convergence protocol stack, Radio Link Control (RLC) is an RLC layer, High Medium Access Control (MAC) and Low MAC are obtained by partitioning an MAC protocol stack; High Phy and Low Phy are obtained by partitioning a physical layer; and Radio Frequency (RF) is an RF function. The above is only one splitting mode, and there are other splitting methods.

A splitting point may be selected from one of options 1-7. Relative to the right, the left of an arrow corresponding to each option is a high layer protocol stack and processed on the CU, and the protocol stack on the right is processed on the DU. But on whatever splitting modes, the RRC protocol is processed only on the CU, and the DU is only responsible for transmitting RRC signaling. The configurations of the protocol stacks on the DU are uniformly controlled by the CU, comprising the configuration of a first Signaling Radio Bearer (SRB1) and the configuration of a second Signaling Radio Bearer (SRB2) of a control plane protocol stack. The SRB1 is used for bearing RRC signaling (which may carry some Non-Access Stratum (NAS) signaling) and the NAS signaling before the SRB2 is established, and the SRB2 is used for bearing the NAS signaling. Generally, there is a Radio Resource Management (RRM) module and a User Equipment (UE) control management module in the control plane processing of the CU. The UE control management module is mainly responsible for processing UE flow control (for example, a RRC connection establishment process, an initial context setup process and a handover process), managing a UE instance state, managing a UE context, configuring a protocol stack and tunnel, and managing mobility.

All the RRC signaling between the base station and the UE needs to be processed on the CU, so in an accessing or moving process of the UE, it is needed to transmit signaling and configure message interaction between the CU and the DU for many times; for example, at least 5 times of network signaling interactions are needed in a RRC connection establishment process, at least 7 times of network signaling interactions are needed in an initial context setup process, at least 6 times of network signaling interactions are needed in an in-DU handover process, and so on. The speed of the light in a single mode fiber is about 200000km/s, if the distance between the CU and the DU is 100km, and the theoretical value of the delay of each piece of signaling is about 0.5ms, then so many network interaction steps between the CU and the DU have great influences on the UE control plane processing. In future, a wireless network has a higher and higher requirement on the delay, but the RRC protocol is particularly sensitive to the delay, so the above method of splitting a CU-DU separation architecture simply based on the protocol stack still needs to be optimized.

US 2016/278110 A1 relates to a base station apparatus, a resource management method, and a data processing method in a wireless communication system supporting a cloud communication center.

Document "3rd Generation Partnership Project; Technical Specification Group Radio Access Network; NG-RAN; Architecture description (Release 15)", 3GPP DRAFT; 38.401-011-RM, 3RD GENERATION PARTNERSHIP PROJECT (3GPP), Mobile Competence Centre; 650, Route des Lucioles; F-06921 Sophia-Antipolis Cedex; France; 26 June 2017 XP051301973) discloses the overall architecture of the NG-RAN, including internal interfaces and assumptions on the radio, NG, Xn and F1 interfaces.

### Summary

Aiming at the above problems in the related art, embodiments of the present disclosure provide a communication method under a wireless base station separation architecture. The invention is defined in the claims.

The following embodiments of the present disclosure relate to unclaimed subject-matter.

Aiming at the above problems in the related art, the embodiments of the present disclosure also provide a DU in the wireless base station separation architecture, comprising: a RRC protocol processing module , which is configured to receive a RRC message sent by UE, and decode and identify the RRC message, so that a RRC protocol is terminated on the DU; and a DU-side User Equipment (UE) control management module (DU-UE control management module), comprises: a RRC connection control submodule, which is configured to execute RRC connection control if in response to identifying that the RRC message sent by the UE is the RRC message of requesting for establishing a RRC connection, and interact with the UE to complete a RRC connection establishing process.

Aiming at the above problems in the related art, the embodiments of the present disclosure also provide a communication method under a separation architecture, comprising: a CU assigns a CU-side User Equipment (UE) Identifier CU-UE-ID to UE when the UE accesses through a Distributed Unit (DU), creating, by the CU, a UE instance on the CU, and managing, by the CU, a UE state and UE context information; and sending, by the CU, the UE context information to the DU, so that the DU completes radio resource admission according to the UE context information.

Aiming at the above problems in the related art, the embodiments of the present disclosure also provide a CU in a separation architecture. The CU comprises a CU-side UE control management module (CU-UE control management module). The CU-UE control management module comprises: a UE management submodule and a process control submodule. The UE management submodule is configured to assign the CU-side UE Identifier CU-UE-ID to the UE when the UE accesses through the DU, creates the UE instance on the CU, and manages a UE state and UE context information. The process control submodule is configured to send the UE context information to the DU, so that the DU completes the radio resource admission according to the UE context information.

Aiming at the above problems in the related art, the embodiments of the present disclosure also provide a wireless base station, which comprises a CU and a DU. The CU adopts the above CU, and the DU adopts the above DU.

Aiming at the above problems in the related art, the embodiments of the present disclosure also provide a RRC connection establishing method, comprising: a DU receives a RRC connection request message sent by the UE; the DU assigns a DU-side UE Identifier DU-UE-ID to the UE, creates a UE instance, and performs admission processing of an SRB1; after the radio resource admission is successful, the DU sends a RRC connection establishment message to the UE; and after receiving a RRC connection establishment completion message sent by the UE, the DU sets the UE state as CONNECTED.

Aiming at the above problems in the related art, the embodiments of the present disclosure also provide a method for establishing a UE initial context, comprising: a DU receives a UE context setup request message sent by the CU, performs radio resource admission and tunnel setup processing according to UE context information in the UE context setup request message, and completes radio resource configuration of a protocol stack; and the DU sends a UE context setup response message to the CU after interacting with the UE to complete RRC connection reconfiguration according to the successfully admitted radio resource.

Aiming at the above problems in the related art, the embodiments of the present disclosure also provide a method for establishing a UE context, comprising: a CU receives a message requiring initializing a UE context which is sent by the DU, saves the DU-UE-ID in the message of requiring initializing a UE context, creates a UE instance for the UE and assigns a CU-UE-ID, and sets the UE state as CONNECTED; the CU sends an initial UE message to a core network, performs tunnel setup after receiving an initial context setup request sent by the core network, and controls the DU to complete the UE context setup process.

Aiming at the above problems in the related art, the embodiments of the present disclosure also provide a method for UE to switch, comprising: a DU receives a handover request message which is sent by a CU during triggering the UE to switch between different cells in the DU, and obtains information of a target cell from the handover request message; and the DU completes the radio resource configuration of the protocol stack after succeeding in the radio resource admission in the target cell, interacts with the UE to complete the RRC connection reconfiguration, and sends a handover completion notification message to the CU.

Aiming at the above problems in the related art, the embodiments of the present disclosure also provide a method for UE to switch, comprising: a target DU receives a handover request message which is sent by a CU during triggering the UE to switch between the DUs, applies to a radio resource management module for radio resource admission, performs the radio resource configuration of the protocol stack after the radio resource admission is successful, sends a handover request acknowledgment to the CU, and carries information of the successfully admitted radio resource; a source DU receives a handover execution message sent by the CU, sends radio resource information carried in the handover execution message to the UE through a RRC connection reconfiguration message, and instructs the UE to switch; and the target DU sends a handover completion notification message to the CU after receiving a RRC connection reconfiguration completion message sent by the UE.

Aiming at the above problems in the related art, the embodiments of the present disclosure also provide a method for UE to switch, comprising: a CU receives a handover request message which is sent by an external source base station during triggering the UE to switch between base stations, creates a UE instance for the UE and assigns the CU-UE-ID to the UE, and after performing tunnel setup, sends a handover request message to a target DU which carries the UE context information; the CU receives a handover response message sent by the target DU, and sends radio resource information successfully admitted by the target DU to the source base station through the handover response message; and the CU receives the handover completion notification message sent by the target DU, interacts with the core network to complete path handover, and sends a UE context release message to the source base station.

Aiming at the above problems in the related art, the embodiments of the present disclosure also provide a method for UE to enter an INACTIVE state, comprising: after receiving a UE context suspension execution message sent by a CU, a DU sends a RRC connection suspension message or a RRC connection release message to the UE; and the DU releases all radio resources of the UE, sets a resume ID, and sends a UE context suspension execution response message to the CU after suspending the UE context of the UE.

Aiming at the above problems in the related art, the embodiments of the present disclosure also provide a method for UE to exit from an INACTIVE state, comprising: after receiving a message of executing resume of the UE context which is sent by the CU, the DU performs the radio resource admission according to UE context information carried in the message of executing resume of the UE context or the locally saved UE context information, performs the radio resource configuration of the protocol stack after the radio resource admission is successful, and sends a RRC connection resume message to the UE; and after receiving a RRC connection resume completion message sent by the UE, the DU sends an response message of executing resume of the UE context to the CU.

Aiming at the above problems in the related art, the embodiments of the present disclosure also provide a computer device, comprising a memory, a processor and a computer program which is stored on the memory and can be run on the processor. When executing the computer program, the processor implements the processing of any above method.

Aiming at the above problems in the related art, the embodiments of the present disclosure also provide a computer-readable storage medium, on which a computer program is stored. When executed by the processor, the computer program implements the processing of any above method.

Under a CU-DU separation architecture, the above solutions of the embodiments may reduce a processing delay of a UE control plane flow better.

In the following description, the invention is described with reference to the first embodiment, while the second to eighth embodiments relate to unclaimed subject-matter.

### Brief Description of the Drawings

Fig. 1 is a schematic diagram of a splitting mode of CU-DU based on a high layer protocol stack and a low layer protocol stack in the related art.
Fig. 2 is a schematic diagram of a control plane processing mode under a CU-DU separation architecture in the related art.
Fig. 3 is a schematic diagram of a control plane processing mode under a CU-DU separation architecture in the first embodiment of the present disclosure.
Fig. 4 is a flowchart of a communication method at a DU side under a CU-DU separation architecture in the first embodiment of the present disclosure.
Fig. 5 is a module diagram of a DU in the first embodiment of the present disclosure.
Fig. 6 is a flowchart of a communication method at a CU side under a CU-DU separation architecture in the first embodiment of the present disclosure.
Fig. 7 is a structure diagram of a UE instance management module at a CU side in the first embodiment of the present disclosure.
Fig. 8 is a flowchart of a RRC connection establishment process under a CU-DU separation architecture in the second embodiment of the present disclosure.
Fig. 9 is a flowchart of a UE initial context setup process at a DU side under a CU-DU separation architecture in the third embodiment of the present disclosure.
Fig. 10 is a flowchart of a UE initial context setup process at a CU side under a CU-DU separation architecture in the third embodiment of the present disclosure.
Fig. 11 is an exemplary signaling flowchart of a UE accessing process in the third embodiment of the present disclosure.
Fig. 12 is a flowchart that UE switches between cells in a DU under a CU-DU separation architecture in the fourth embodiment of the present disclosure.
Fig. 13 is an exemplary signaling flowchart that UE switches between cells in a DU under a CU-DU separation architecture in the fourth embodiment of the present disclosure.
Fig. 14 is a flowchart that UE switches between DUs under a CU-DU separation architecture in the fifth embodiment of the present disclosure.
Fig. 15 is an exemplary signaling flowchart that UE switches between DUs, which are under the same base station, under a CU-DU separation architecture in the fifth embodiment of the present disclosure.
Fig. 16 is an exemplary signaling flowchart that UE switches between DUs, which are under different base stations, under a CU-DU separation architecture in the fifth embodiment of the present disclosure.
Fig. 17 is a flowchart that UE switches from an external base station to the inside of a CU under a CU-DU separation architecture in the sixth embodiment of the present disclosure.
Fig. 18 is an exemplary signaling flowchart that UE switches from an external base station to the inside of a CU under a CU-DU separation architecture in the sixth embodiment of the present disclosure.
Fig. 19 is a flowchart that UE enters an ACTIVE state under a CU-DU separation architecture in the seventh embodiment of the present disclosure.
Fig. 20 is a flowchart that UE exits from an ACTIVE state under a CU-DU separation architecture in the seventh embodiment of the present disclosure.
Fig. 21 is an exemplary signaling flowchart that UE sensed by a core network enters and exits from an ACTIVE state under a CU-DU separation architecture in the seventh embodiment of the present disclosure.
Fig. 22 is an exemplary signaling flowchart that UE not sensed by a core network enters and exits from an ACTIVE state under a CU-DU separation architecture in the seventh embodiment of the present disclosure.
Fig. 23 is an exemplary signaling flowchart that UE enters an INACTIVE state in a CU and returns to an ACTIVE state in external base station under a CU-DU separation architecture in the seventh embodiment of the present disclosure.

### Detailed Description of the Embodiments

In order to make the purpose, technical solutions and advantages of the present disclosure clearer, embodiments of the present disclosure will be described below in combination with the drawings in detail. It is to be noted that the embodiments in the present application and the characteristics in the embodiments may be combined under the condition of no conflicts.

### First embodiment

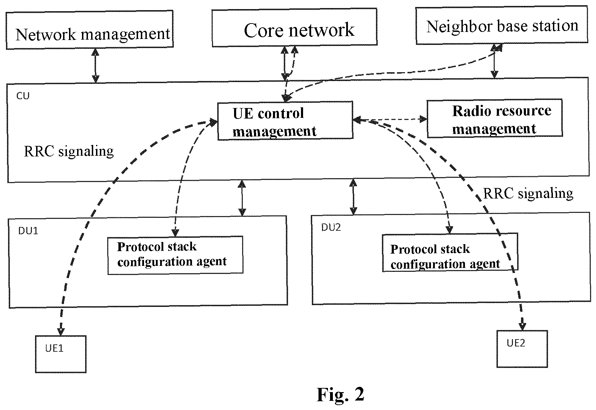

In the related art, a CU is mainly responsible for processing a high layer protocol, a DU is responsible for processing a low layer protocol, and there are a plurality of DUs under one CU. As illustrated in Fig. 2, there is generally a UE control management module and a radio resource management module on a CU control plane. The CU control plane is configured to complete functions like assigning a UE ID and managing a UE instance state, managing a UE context, maintaining a relationship between a UE instance and an external interface of a base station, controlling a UE flow, managing a radio resource, applying for CU and DU transmission tunnels, configuring protocol stacks (comprising all the protocol stacks on the CU and the DU), managing mobility, and selecting and configuring a security algorithm. A DU control plane completes functions like transmitting signaling of the base station and the UE through the protocol, performing configuration of a DU transmission tunnel, and cooperating with the CU through a low layer protocol stack configuration agent module to complete configuration of a low layer protocol stack. Such a splitting mode causes that a RRC protocol can only be terminated on the CU, and when completing a RRC function, the CU needs to send low layer protocol stack configuration signaling and transmit RRC signaling to the DU, so the number of network signaling hops is relatively great, which causes the problems of increased control plane delay and degraded performance.

The present embodiment provides a method for reducing a UE control plane processing delay under a wireless base station separation architecture (namely a CU-DU separation architecture). A control plane is not split simply based on a protocol stack mode, but all control plane protocol stacks are processed on the DU, so that the RRC protocol be terminated on the DU, and a part of UE control management functions and radio resource configuration related processing flows be moved to the DU. In a UE process, the CU controls the DU to perform the processing flows related to a core network or a neighbor base station or other DUs. Even in a UE control flow led by the CU, the CU no longer needs to send separately a protocol stack configuration message and RRC signaling to the DU, but sends UE context information, so that the DU completes protocol stack configuration and controls the sending of the RRC signaling by itself. Therefore, a lot of network interaction flows between the DU and the CU before be reduced, a control plane delay is reduced, and a processing efficiency of the CU and the DU is improved.

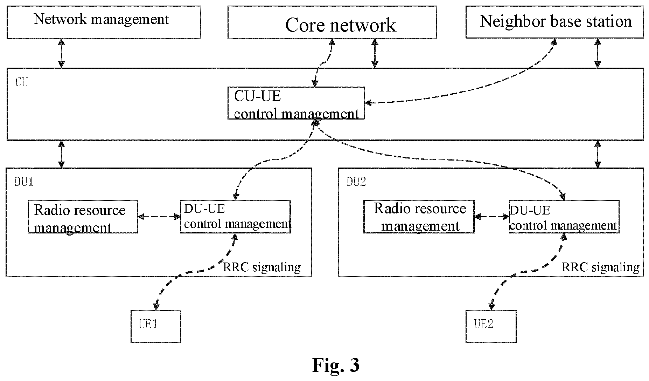

As illustrated in Fig. 3, the present embodiment splits the UE control management module on the CU in the related art into a CU-UE control management module and a DU-UE control management module, deploys them on the CU and the DU respectively, and moves down the radio resource management module to the DU. The protocol processing of all the protocol stacks of the control plane is performed on the DU, a RRC protocol processing module (not shown in the drawings) is set on the DU, and the RRC protocol is terminated on the DU, that is, a RRC message is decoded and identified on the DU; in this way, a UE control flow only involving RRC be independently completed on the DU (for example, a RRC connection establishment process), and other UE control flows be performed by the DU which is controlled by the CU. The CU provides, through an interface between the CU and the DU, UE context information like an Evolved Radio Access Bearer (ERAB) setup list, a security algorithm and a security context, so there is no need to transmit lots of RRC signaling between the CU and the DU.

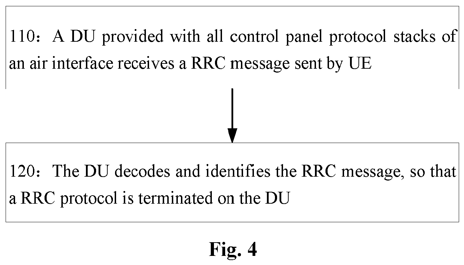

The present embodiment provides a communication method under a wireless base station separation architecture, which is applied to a DU side. As illustrated in Fig. 4, a RRC message receiving process comprises the following steps. At S110, a DU provided with all control panel protocol stacks of an air interface receives a RRC message sent by UE. At S120, the DU decodes and identifies the RRC message, so that a RRC protocol is terminated on the DU.

In the present embodiment, after the DU decodes and identifies the RRC message, the method further comprises that: if in response to identifying that the RRC message sent by the UE is the RRC message of requesting for establishing a RRC connection, the DU executes RRC connection control, and interacts with the UE to complete a RRC connection establishing process.

In the present embodiment, after the DU decodes and identifies the RRC message, the method further comprises that: if in response to identifying that the message sent by the UE is the RRC message carrying a measurement report or an NAS message, the DU forwards the measurement report or the NAS message to the CU. The DU directly forwards the measurement report or the NAS message to the CU without processing, and also adopts a new coding format to code.

The communication method of the present embodiment further comprises the following RRC method: the DU performs radio resource admission for the accessing UE according to managed radio resources, and completes radio resource configuration of a control plane protocol stack after the radio resource admission is successful.

The communication method of the present embodiment further comprises the following UE managing method: the DU assigns a DU-side UE Identity DU-UE-ID to the UE accessing, creates a UE instance on the DU, and manages a UE state and UE context information. In the present embodiment, after the DU assigns the DU-UE-ID to the UE accessing, the DU carries the DU-UE-ID in the message sent to the CU, obtains a CU-side UE Identity CU-UE-ID, which is assigned to the UE by the CU, from the message sent by the CU, and carries the DU-UE-ID and the CU-UE-ID in all messages subsequently sent to the CU

The communication method of the present embodiment further comprises the following switch processing method: the DU performs switch processing of the UE under the control of the CU; specifically, a target DU performs the radio resource admission for the UE in a target cell; a source DU interacts with the UE according to the radio resource successfully admitted by the target DU to complete RRC connection reconfiguration, and instructs the UE to switch to the target cell.

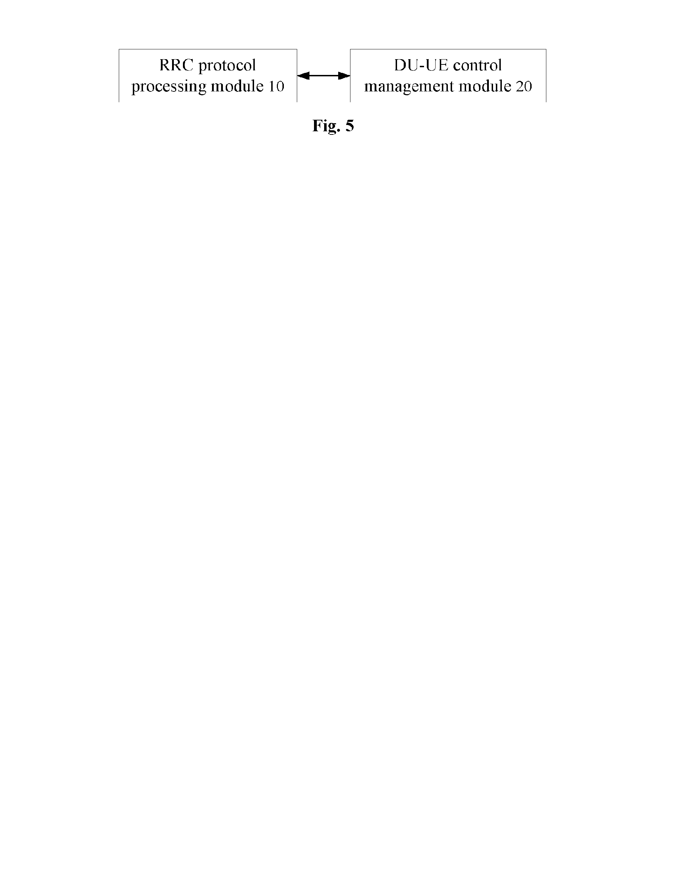

The present embodiment also provides a DU in a wireless base station separation architecture. As illustrated in Fig. 5, the DU comprises: a RRC protocol processing module 10 and a DU-UE control management module 20.

The RRC protocol processing module 10 is configured to receive the RRC message sent by the UE, and decode and identify the RRC message, so that the RRC protocol is terminated on the DU.

The DU-UE control management module 20 comprises:
a RRC connection control submodule, which is configured to execute RRC connection control if in response to identifying that the RRC message sent by the UE is the RRC message of requesting for establishing a RRC connection, and interact with the UE to complete a RRC connection establishing process.

In the present embodiment,
the DU further comprises: a radio resource management module which is configured to manage radio resources;
the DU-UE control management module further comprises:
   a radio resource control submodule, which is configured to perform radio resource admission for the accessing UE according to the radio resources managed by the radio resource management module, and complete radio resource configuration of a control plane protocol stack after the radio resource admission is successful.

In the present embodiment,
the DU-UE control management module further comprises:
a message forwarding submodule, which is configured to forward, when the RRC protocol processing module identifies that the RRC message sent by the UE carries the measurement report or the NAS message, the measurement report or the NAS message to the CU for processing.

In the present embodiment,
the DU-UE control management module further comprises:
a UE management submodule, which is configured to assign the DU-UE-ID to the accessing UE, create the UE instance on the DU, and manage the UE state and the UE context information.

In the present embodiment,
the DU-UE control management module further comprises:
a message processing submodule, which is configured to carry the DU-UE-ID in the message sent to the CU, obtain the CU-UE-ID, which is assigned to the UE by the CU, from the message sent by the CU, and carry the the DU-UE-ID and the CU-UE-ID in all messages subsequently sent to the CU

In the present embodiment,
the DU-UE control management module further comprises:
a switch control submodule, which is configured to perform a switch processing flow of the UE under the control of the CU; comprises, a switch control submodule of the target DU performs the radio resource admission for the UE in the target cell, the switch control submodule of the source DU interacts with the UE according to the radio resource admission successfully admitted by the target DU to complete the RRC connection reconfiguration, and instructs the UE to switch to the target cell.

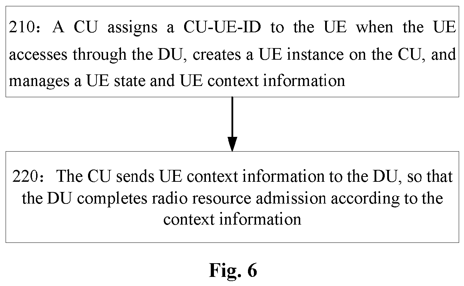

The present embodiment also provides a communication method under a separation architecture, which is applied to the CU side. As illustrated in Fig. 6, the method comprises the following steps. At S210, the CU assigns the CU-UE-ID to the UE when the UE accesses through the DU, creates the UE instance on the CU, and manages the UE state and the UE context information. At S220, the CU sends the UE context information to the DU, so that the DU completes the radio resource admission according to the context information.

In the present embodiment,
before the CU assigns the CU-UE-ID to the UE, the method further comprises that: the CU obtains the DU-UE-ID which is assigned to the UE from the message sent by the DU. After the CU assigns the CU-UE-ID to the UE, the method further comprises that: the CU carries the DU-UE-ID and the CU-UE-ID in all messages sent to the DU.

In the present embodiment,
the method further comprises that: in the process of establishing the initial context of the UE, the CU sends the security algorithm selected by the CU and the security context generated by the CU to the DU.

In the present embodiment,
the method further comprises that: the CU performs handover determination according to the measurement report of the UE, and if the handover determination triggers the UE to switch, instructs the source DU and the target DU to perform handover. When the UE switches between different cells in the DU, the source DU and the target DU are the same DU.

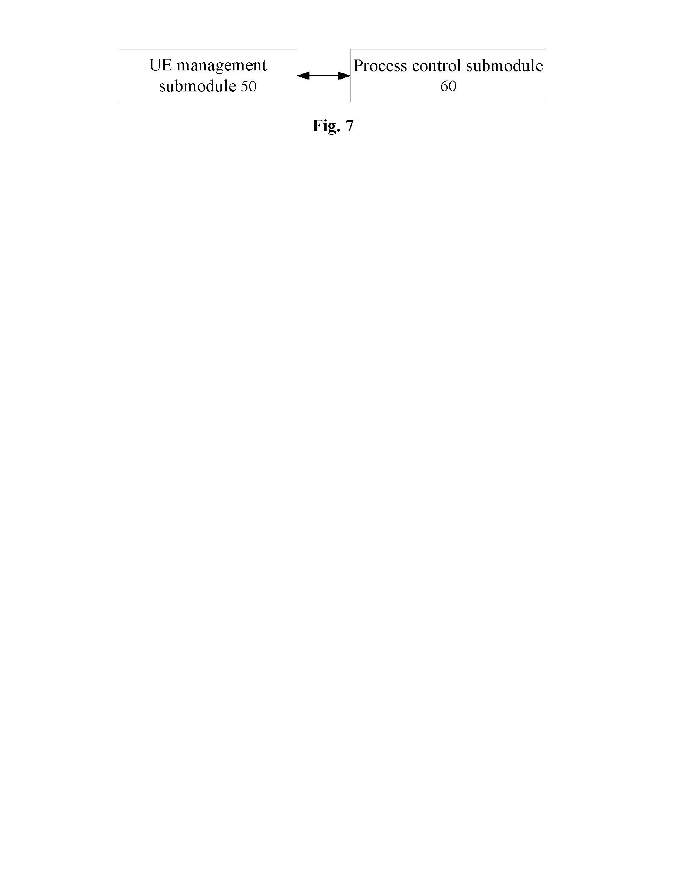

The present embodiment also provides a CU in a separation architecture. The CU comprises the CU-UE control management module. As illustrated in Fig. 7, the CU-UE control management module further comprises: a UE management submodule 50 and a process control submodule 60.

The UE management submodule 50 is configured to assign the CU-UE-ID to UE when the UE accesses through the DU, create the UE instance on the CU, and manage the UE state and the UE context information.

The process control submodule 60 is configured to send the UE context information to the DU, so that the DU completes the radio resource admission according to the UE context information.

In the present embodiment,
the CU-UE control management module further comprises:
a message processing submodule, which is configured to obtain the DU-UE-ID, which is assigned to the UE by the DU, from a message sent by the DU, and after the UE management submodule assigns the CU-UE-ID to the UE, carry the the DU-UE-ID and the CU-UE-ID in all messages sent to the DU.

In the present embodiment,
the UE process control submodule is further configured to send, in the process of establishing the initial context of the UE, the security algorithm selected by the CU and the security context generated by the CU to the DU.

In the present embodiment,
the CU-UE control management module further comprises: a handover determination submodule, which is configured to perform the handover determination according to the measurement report of the UE, and if the handover determination triggers the UE to switch, instruct the source DU and the target DU to perform handover.

In the present embodiment, functions of the CU control plane and the DU control plane may be expressed by the following table.

| | |
|---|---|
| CU control plane (DU-UE control management) | DU control plane (DU-UE control management and radio resource management) |
| CU-UE-ID assignment and CU-UE instance state management | DU-UE-ID assignment and DU-UE instance state management |
| UE process control | UE process execution |
| / | RRC connection control |
| Transmitting the NAS message, processing a small amount of RRC signaling (for example, the measurement report) | Identifying all the RRC signaling, processing most RRC signaling, transmitting the NAS message and a small amount of RRC signaling (for example, the measurement report) |
| CU-UE context management | DU-UE context management |
| / | Radio resource management |
| CU transmission tunnel configuration | DU transmission tunnel configuration |
| and execution | and execution |
| Configuration and execution of the user plane high layer protocol stack (if configured on the CU) | Configuration and execution of the user plane low layer protocol stack and all the control plane protocol stacks |
| Mobility management | / |
| Selecting the security algorithm | Performing the security algorithm |

The above features relates to present embodiment of Fig. 6 are not covered by the claims.

The present embodiment also provides a wireless base station, comprising a CU and a DU. The CU adopts any CU in the present embodiment, and the DU adopts any DU in the present embodiment.

Compared with the traditional CU-DU separation architecture, the CU-DU separation architecture of the present embodiment terminates the RRC protocol on the DU; for the functions only involving DU resources (radio resources), the UE control process is completed on the DU individually; and the control plane process involving both the DU resources and the CU resources is performed by the DU which is controlled by the CU through the UE context. The RRC signaling may be processed without reaching the CU, so the CU no longer needs to send protocol stack configuration signaling and RRC signaling to the DU separately, and the DU only needs to perform local configuration and send the RRC signaling according to the UE context information. In this way, the steps of the processing flow is reduced, a great number of unnecessary network hops are saved, and a UE control plane delay is greatly reduced. The synergies of the CU is kept while the performance of the UE control plane is improved.

Such a CU-DU separation architecture keeps the synergies between distributed base stations while improving control performance of the distributed base stations.

Based on the wireless base station separation architecture of the first embodiment, a UE accessing process comprises a RRC connection establishment process and a UE initial context setup process, which are illustrated in the second embodiment and the third embodiment below.

### Second embodiment

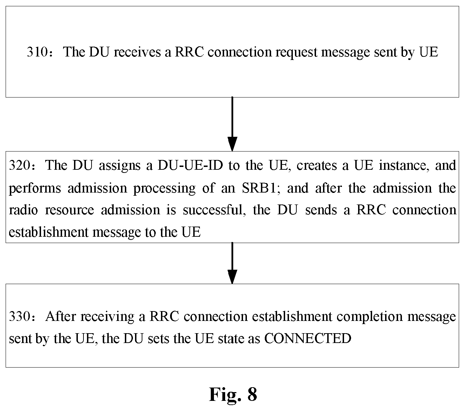

As illustrated in Fig. 8, a RRC connection establishing method of the present embodiment comprises the following steps. At S310, a DU receives a RRC connection request message sent by UE. At S320, the DU assigns a DU-UE-ID to the UE, creates a UE instance, and performs admission processing of an SRB1; and after the radio resource admission is successful, the DU sends a RRC connection establishment message to the UE. At S330, after receiving a RRC connection establishment completion message sent by the UE, the DU sets the UE state as CONNECTED. It should be noted that the meaning of the "RRC connection request message" should be understood as an "RRC message used for requesting the establishment of a RRC connection, but should not be inflexibly understood as the name of the RRC message must be the "RRC connection request message". The name of the RRC message changes in different systems, but the RRC message should be considered as the "RRC connection request message" of the present application as long as it is used for requesting the establishment of the RRC connection. Similarly, the "RRC connection establishment completion message" of the present application should be understood as an "RRC message used for indicating the completion of a RRC connection establishment", so are the messages in the present embodiment and other embodiments, which will not be explained.

In the present embodiment, after the DU performs the radio resource admission processing of the SRB1 and the radio resource admission is successful, the method further comprises that: the DU completes SRB1 configuration of a control plane protocol stack.

The above steps mainly focus on related processing capable of reducing a UE control plane delay. In the RRC connection establishment process, the DU also performs other processing, for example, performing Data Radio Bearer (DRB) admission, and performing DRB configuration of a user plane protocol stack after the radio resource admission is successful. The flows of other embodiments in the present application are similar to that.

Correspondingly, the present embodiment also provides a DU. Refer to Fig. 5, the DU comprises a RRC protocol processing module, a DU-UE control management module and a radio resource management module.

The radio resource management module is configured to perform radio resource management.

The RRC protocol processing module is configured to receive the RRC message sent by the UE, and decode and identify it.

The DU-UE control management module is configured to assign, when the RRC protocol processing module identifies that the message sent by the UE is the RRC connection request message, a DU-UE-ID to the UE, create a UE instance, apply to the radio resource management module for SRB1 admission, and after the radio resource admission is successful, send the RRC connection establishment message to the UE. The DU-UE control management module is also configured to set a UE state as CONNECTED after receiving a RRC connection establishment completion message sent by the UE.

In the present embodiment,
after the DU-UE control management module performs the radio resource admission process of the SRB1 and the radio resource admission is successful, the DU-UE control management module is also configured to complete the SRB1 configuration of the control plane protocol stack.

The delay of the RRC connection establishment process usually serves as a key performance indicator, the shorter the better. The process of the present embodiment involves only the radio resource control, and the radio resource management is implemented on the DU, so the whole process does not need the involvement of the CU. Compared with the method under the existing CU-DU architecture, at least four times of network interaction be saved, thereby it is ensured that the UE establish quickly the RRC connection with the base station.

### Third embodiment

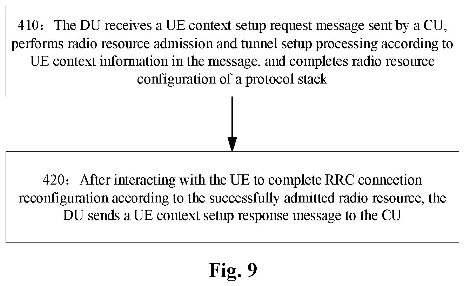

The present embodiment also provides a method for establishing a UE initial context, which is applied to a DU side. As illustrated in Fig. 9, the method comprises the following steps. At S410, the DU receives a UE context setup request message sent by a CU, performs radio resource admission and tunnel setup processing according to UE context information in the UE context setup request message, and completes radio resource configuration of a protocol stack. At S420, after interacting with the UE to complete RRC connection reconfiguration according to the successfully admitted radio resource, the DU sends a UE context setup response message to the CU.

In the present embodiment,

the step that the DU performs the radio resource admission and tunnel setup processing according to the context information, and completes the radio resource configuration of the protocol stack comprises that: the DU performs SRB2 and DRB admission according to an ERAB setup list, distributes downlink tunnel node information between the CU and the DU, and completes SRB2 configuration of a control plane protocol stack and DRB configuration of a user plane protocol stack; and the UE context setup response message sent to the CU by the DU carries the successfully admitted ERAB setup list and the downlink tunnel node information between the CU and the DU.

In the present embodiment,
before the DU receives the UE context setup request message sent by the CU, the method further comprises that:
after interacting with the UE to complete the RRC connection establishment, the DU sends a message of requiring initializing a UE context to the CU, and the message carries an NAS message and a DU-UE-ID which is assigned to the UE by the DU; and
the DU receives a UE related message sent by the CU, obtains a CU-UE-ID from the UE related message, and carries the DU-UE-ID and the CU-UE-ID when sending the UE related message to the CU.

In the present embodiment,
after the DU receives the UE context setup request message sent by the CU, the method further comprises that:
the DU obtains information of a security context and a security algorithm from the UE context setup request message, and activates a UE security mode.

The present embodiment also provides a DU. Refer to Fig. 3, the DU comprises a radio resource management module and a DU-UE control management module.

The radio resource management module is configured to perform radio resource management and radio resource admission processing.

The DU-UE control management module comprises a first unit and a second unit.

The first unit is configured to receive the UE context setup request message sent by the CU, apply to the radio resource management module for the radio resource admission and tunnel setup processing according to the UE context information in the message, and complete the radio resource configuration of the protocol stack after the radio resource admission is successful.

The second unit is configured to send a UE context setup response message to the CU after interacting with the UE to complete the RRC connection reconfiguration according to the successfully admitted radio resource.

In the present embodiment,

the step that the first unit performs the radio resource admission and tunnel setup processing according to the context information in the message, and completes the radio resource configuration of the protocol stack comprises that: the DU performs the SRB2 and DRB admission according to the ERAB setup list, distributes the downlink tunnel node information between the CU and the DU, and completes the SRB2 configuration of the control plane protocol stack and the DRB configuration of the user plane protocol stack.

The UE context setup response message sent to the CU by the second unit carries the successfully admitted ERAB setup list and the downlink tunnel node information between the CU and the DU.

In the present embodiment,

the DU-UE control management module further comprises: a third unit, which is configured to send, after interacting with the UE to complete the RRC connection establishment, the message of requiring initializing the UE context to the CU, wherein the message carries the NAS message and the DU-UE-ID which is assigned to the UE by the DU, receive the UE related message sent by the CU, obtain the CU-UE-ID from the message, and carry the DU-UE-ID and the CU-UE-ID when sending the UE related message to the CU.

In the present embodiment,

after receiving the UE context setup request message sent by the CU, the first unit is further configured to obtain the information of the security context and the security algorithm from the UE context setup request message, and activate the UE security mode.

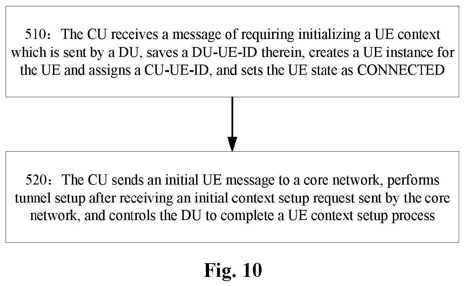

The present embodiment also provides a method for establishing a UE initial context, which is applied to a CU side. As illustrated in Fig. 10, the method comprises the following steps. At S510, a CU receives a message of requiring initializing a UE context which is sent by a DU, saves a DU-UE-ID in the message of requiring initializing a UE context, creates a UE instance for the UE and assigns a CU-UE-ID, and sets the UE state as CONNECTED. At S520, the CU sends an initial UE message to a core network, performs tunnel setup after receiving an initial context setup request sent by the core network, and controls the DU to complete a UE context setup process.

In the present embodiment,
the step that the CU controls the DU to complete the UE context setup process comprises that:
the CU sends the UE context setup request message to the DU, carrying an ERAB setup list of the UE and an uplink tunnel node information between the CU and the DU;
the CU receives a UE context setup response message which is sent by the DU after completing RRC connection reconfiguration of the UE, and obtains the successfully admitted ERAB list and the downlink tunnel node information between the CU and the DU from the message; and
the CU sends an initial context setup response message to the core network, carrying the ERAB list successfully set up.

In the present embodiment,
after the CU assigns the CU-UE-ID to the UE, the method further comprises: the CU carries the CU-UE-ID and the DU-UE-ID in all messages sent to the DU.

In the present embodiment,
when the CU sends the UE context setup request message to the DU, the message also carries a security algorithm selected according to UE security capability information and an encrypted security context with integrity protection generated according to a security key.

The present embodiment also provides a CU. Refer to Fig. 3, the CU comprises a CU-UE control management module.

The CU-UE control management module comprises a first unit and a second unit.

The first unit is configured to receive the message of requiring initializing the UE context which is sent by the DU, save the DU-UE-ID in the message, create a UE instance for the UE and assign the CU-UE-ID, and set the UE state as CONNECTED.

The second unit is configured to send an initial UE message to the core network, perform tunnel setup after receiving the initial context setup request sent by the core network, and control the DU to complete the UE context setup process.

In the present embodiment,
after the first unit assigns the CU-UE-ID to the UE, the method further comprises that: the CU carries the CU-UE-ID and the DU-UE-ID in all messages sent to the DU.

In the present embodiment,
the step that the second unit controls the DU to complete the UE context setup process comprises that:
the second unit sends the UE context setup request message to the DU, wherein the UE context setup request message carrying the ERAB setup list of the UE and the uplink tunnel node information between the CU and the DU;
the second unit receives a UE context setup response message which is sent by the DU after completing RRC connection reconfiguration of the UE, and obtains the successfully admitted ERAB list and the downlink tunnel node information between the CU and the DU from the UE context setup response message; and
the second unit sends an initial context setup response message to the core network, carrying the ERAB list successfully set up.

In the present embodiment,

When the second unit sends the UE context setup request message to the DU, the initial context setup response message also carries the security algorithm selected according to the UE security capability information and the security context generated according to the security key.

The CU and the DU in the present embodiment create respectively their own UE instances, manage the UE states and the UE contexts, and associate with each other through the DU-UE-ID and the CU-UE-ID. An NAS load forwarded between the DU and the CU is not encapsulated through the RRC protocol any more, and the RRC signaling in a RRC connection reconfiguration process is sent between the DU and the UE without the involvement of the CU, so compared with the method under the existing CU-DU architecture, many times of network interaction be saved, and the UE initial context setup process is accelerated.

The above features relates to present embodiment of Figs. 8-9 are not covered by the claims.

An example of an accessing process of UE is given below, so as to provide an auxiliary explanation aiming at the methods in the first embodiment and the second embodiment.

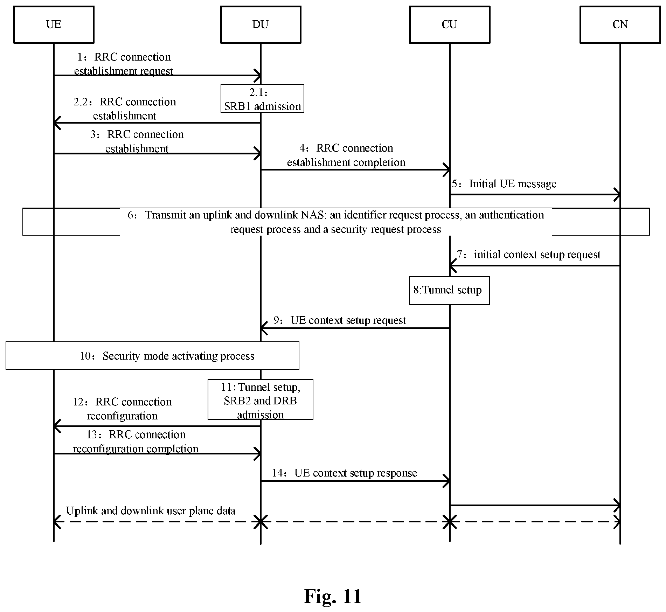

According to the method under the traditional CU-DU separation architecture, all the RRCs in the accessing process of UE will reach the CU, and the CU needs to perform SRB1, SRB2 and DRB configuration to low layer protocol stacks of the DU. By using the separation architecture of the first embodiment, the RRC has not need to reach the CU for processing, and the configuration to the protocol stacks (comprising the control plane protocol stack and the user plane protocol stack) on the DU is also completed in the DU, a RRC connection establishment process and a security mode activation process do not need the involvement of the CU, thereby greatly reducing a control delay. As illustrated in Fig. 11, the accessing process of UE under the CU-DU separation architecture in the present example comprises the following steps.

At S1, UE sends a RRC connection request message to a DU.

At S2.1, in response to identifying a RRC connection request message, creates a DU-side UE instance (DU-UE instance) and assigns a DU-UE-ID, and performs admission processing of an SRB1.

At S2.2, if the radio resource admission of the SRB1 is successful, SRB1 configuration of a control plane protocol stack, and sends a RRC connection establishment message to the UE.

At S3, the UE sends a RRC connection establishment completion message to the DU, carrying an NAS message; after receiving the message, the DU sets a UE state as CONNECTED.

The steps from S1 to S3 are the RRC connection establishment process. The control of RRC connection establishment in the present example is performed on the DU without the involvement of the CU, so compared with the method under the existing CU-DU architecture, at least four times of network interaction may be saved, thereby it is ensured that the UE may establish quickly the RRC connection with the base station.

At S4, the DU sends a message of requiring initializing a UE context (or called an initial UE context request message) to the CU, carrying the DU-UE-ID, a DU-ID, a cell ID and an NAS message carried in the RRC connection establishment completion message.

At S5, after receiving the message of requiring initializing the UE context, the CU saves the DU-UE-ID and other context information in the message, assigns the CU-UE-ID to the UE, creates a CU-side UE instance (called a CU-UE instance for short), sets the UE state as CONNECTED, and then forwards through an initial UE message the NAS message to the core network for processing.

At S6, uplink and downlink NAS signaling is transmitted between the CU and the

DU, and an identifier request process, an authentication request process and a security request process are completed.

In the step, when receiving the first message (which is likely to be the NAS message) from the CU, the DU records the CU-UE-ID. After that, each UE related message between the CU and the DU carries the CU-UE-ID and the DU-UE-ID. This way may help the CU and the DU to identify each other and associate with related UE processing.

It can be seen from the above step that the CU and the DU manage respectively their own UE instance states and the UE contexts, and associate with each other through the DU-UE-ID and the CU-UE-ID. It is not needed to encapsulate the NAS load forwarded between the DU and the CU through the RRC protocol any more.

At S7, the CU receives an initial context setup request from the core network, and saves UE context information which comprises an ERAB setup list.

The ERAB setup list will carry tunnel node information (IP+TEID) and born QoS information of an opposite end. The core network may send the setup of a plurality of bearers, but the base station will not agree the setup of all bearers, so it is needed to perform admission processing.

At S8, the CU configures respectively a high layer user plane protocol stack and assigns DU-CU downlink tunnel node information and CU-DU uplink tunnel node information of the core network according to ERAB setup list information, so as to set up a data transmission tunnel. The CU also selects, according to UE security capability information, the security algorithm supported by the base station, and generates the security context according to the security key.

At S9, the CU sends the UE context setup request message to the DU, carrying the CU-DU uplink tunnel node information, the ERAB setup list, the security context, the security algorithm, the Aggregate Maximum Bit Rate (AMBR), and other information.

At S10, after receiving the UE context setup request message, the DU activates the UE security mode.

At S11, the DU applies to the radio resource management module for the SRB2 and DRB admission according to the ERAB setup list, assigns the CU-DU downlink tunnel node information, and if the radio resource admission is successful, completes the SRB2 configuration and the DRB configuration of the protocol stack on the DU.

At S12, the DU combines SRB2 information and DRB information into a RRC connection reconfiguration message, and sends the RRC connection reconfiguration message to the UE.

At S13, the UE completes the configuration after receiving the RRC connection reconfiguration message, and replies a RRC connection reconfiguration completion message to the DU.

At S14, after receiving the RRC connection reconfiguration completion message, the DU sends a UE context setup response message to the CU, carrying the successfully admitted ERAB list and the corresponding CU-DU downlink tunnel node information.

At S15, after receiving the UE context setup response message, the CU sends an initial context setup response message to the core network, carrying the successfully admitted ERAB list. Now user plane data channels between the UE, the DU, the CU and the core network are established completely.

It can be seen from the above steps that on the aspect of tunnel management, the CU and the DU are responsible for the setup of their own tunnels. The selection of the security algorithm is completed on the CU, and the DU needs to activate the UE security mode according to the security algorithm selected by the CU and the security context.

The CU has an external interface of the base station an interface connecting all the DUs under the CU, and has more comprehensive information, which facilitates the synergy of interactions between the different DUs, between the different cells in the DU and between the external network elements, and facilitates the selection of the best processing mode. So, the process of the UE needing synergy like handover is completed by the DU under the control of the CU.

There may be different cells in the DU. When moving between the different cells in the DU, the UE may trigger the handover between the different cells in the DU, which is similar to the switch in the base station of the traditional integrated base station. If there is no UE control management module on the DU according to the traditional CU-DU architecture, the DU cannot complete independently the switch in the DU, and both the configuration of the protocol stack and the RRC signaling need to be controlled by the CU, which will bring a longer delay. Based on the CU-DU separation architecture, in the present embodiment, the CU only needs to send a handover request, and the handover between the different cells in the DU is completed by the DU independently, thereby simplifying handover steps and reducing a handover delay.

The CU may perform handover determination according to a measurement report of the UE. Because there are interfaces between the CU and the core network, the neighbor base station and the DU established on the CU, the CU is responsible for the synergy inside and outside the base station. First measurement configuration may be delivered after the CU-UE control management module receives the UE context setup response message. After receiving the measurement report forwarded by the DU, the CU-UE control management module adjusts the measurement configuration according to a policy configured by the base station and information of the measurement report. When a handover threshold is reached, the handover is triggered. The handover between the different cells in the DU, the handover between the different DUs in the CU, or the handover to an external base station may happen. During the handover between the different cells in the DU, a source DU is namely a target DU.

According to different scenarios, solutions for the UE to switch based on the CU-DU separation architecture in the first embodiment are illustrated below by means of a plurality of embodiments.

### Fourth embodiment

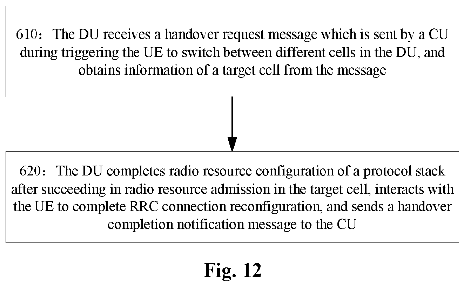

The present embodiment provides a method for UE to switch between different cells in a DU, which is applied to a DU side. As illustrated in Fig. 12, the method comprises the following steps. At S610, a DU receives a handover request message which is sent by a CU during triggering the UE to switch between different cells in the DU, and obtains information of a target cell from the handover request message. At S620, the DU completes radio resource configuration of a protocol stack after succeeding in radio resource admission in the target cell, interacts with the UE to complete RRC connection reconfiguration, and sends a handover completion notification message to the CU. In the handover process, the CU controls the DU to perform the RRC connection reconfiguration process only by delivering the handover request message, so the DU has no need to transmit the corresponding RRC signaling as in the related art.

The present embodiment also provides a DU. Refer to Fig. 3, the DU comprises a radio resource management module and a DU-UE management control module.

The radio resource management module is configured to perform radio resource management.

The DU-UE management control module comprises a first unit and a second unit.

The first unit is configured to receive the handover request message which is sent by the CU during triggering the UE to switch between the different cells in the DU, and obtain information of a target cell from the handover request message.

The second unit is configured to apply to the radio resource management module for radio resource admission in the target cell, complete the radio resource configuration of the protocol stack after the radio resource admission is successful, interact with the UE to complete the RRC connection reconfiguration, and send a handover completion notification message to the CU.

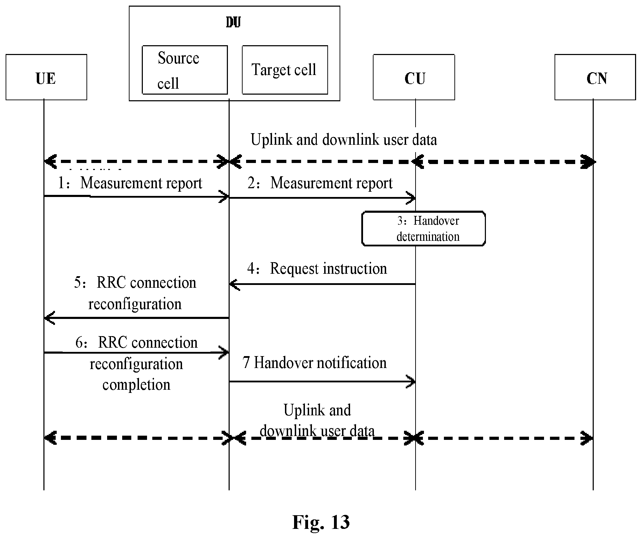

An example is given below to illustrate the process that the UE switches between the cells in the DU in the present embodiment. As illustrated in Fig. 13, the process comprises the following steps.

At S1, the UE sends a measurement report message to the DU.

At S2, after identifying the measurement report message, the DU forwards it to the CU. The DU may forward the content of the measurement report to the CU without processing or after adopting a new coding format to code it.

At S3, the CU performs the handover determination according to the measurement report, and triggers the UE to switch between different cells in the DU. The CU saves information of all the cells in the DU, and may determine whether the source cell and the target cell are in the same DU.

At S4, the CU sends a handover request message to the DU, carrying a target cell ID. After receiving the handover request message, the DU performs radio resource admission in the target cell, and if the radio resource admission is successful, performs handover.

The radio resource admission of the step comprises the radio resource admission processing of the SRB1, the SRB2 and the DRB. When the radio resource admission is successful and the handover is performed, the radio resource configuration of the protocol stack is completed in the target cell; the radio resource configuration comprises the SRB1 and SRB2 configuration of the control plane protocol stack, and the DRB configuration of the user plane protocol stack.

At S5, the DU sends a RRC connection reconfiguration message to the UE, and instructs the UE to switch to the target cell.

At S6, after receiving the RRC connection reconfiguration message, the UE releases the radio resource of the source cell, performs handover, and accesses the target cell in the present DU. Transmission tunnel information of the DU and the CU may remain unchanged, the DU-UE-ID and the CU-UE-ID also remain unchanged.

At S7, after receiving a RRC connection reconfiguration completion message from the UE, the DU sends a handover completion notification message to the CU, and synchronizes the latest UE context information. The DU may only need to transmit a part of the changed context content.

It can be seen from the above process that although the handover determination is completed on the CU, the handover process happens basically on the DU, so the handover in the DU based on the architecture reduces the number of network signaling of the control plane between the CU and the DU to 2, and the performance is improved significantly compared with the related art.

### Fifth embodiment

The present embodiment provides a method for UE to switch between DUs, comprising two scenarios where the UE switches between different DUs of the same base station and the UE switches between the DUs of the different base stations.

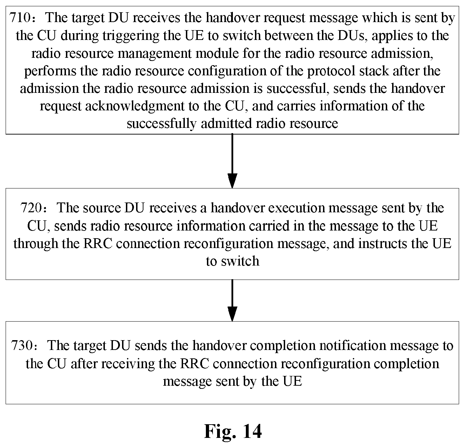

As illustrated in Fig. 14, the method of the present embodiment which is applied to the DU side comprises the following steps. At S710, a target DU receives the handover request message which is sent by the CU during triggering the UE to switch between the DUs, applies to the radio resource management module for the radio resource admission, performs the radio resource configuration of the protocol stack after the radio resource admission is successful, sends the handover request acknowledgment to the CU, and carries information of the successfully admitted radio resource. At S720, a source DU receives a handover execution message sent by the CU, sends radio resource information carried in the handover execution message to the UE through the RRC connection reconfiguration message, and instructs the UE to switch. At S730, the target DU sends the handover completion notification message to the CU after receiving the RRC connection reconfiguration completion message sent by the UE.

In the present embodiment,
After the target DU receives the handover request message, the method further comprises that: the target DU creates the UE instance for the UE and assigns the DU-UE-ID to the UE, and carries in the handover request acknowledgment the DU-UE-ID assigned by the DU.

The present embodiment also provides a DU. Refer to Fig. 3, the DU comprises a radio resource management module and a DU-UE management control module.

The radio resource management module is configured to perform radio resource management.

The DU-UE management control module comprises a first unit and a second unit.

The first unit is configured to receive, when the DU serves as the target DU, the handover request message which is sent by the CU during triggering the UE to switch between the DUs, apply to the radio resource management module for the radio resource admission, perform the radio resource configuration of the protocol stack after the radio resource admission is successful, and send the handover request acknowledgment to the CU, carrying the information of the successfully admitted radio resource. The first unit is further configured to send the handover completion notification message to the CU after receiving the RRC connection reconfiguration completion message sent by the UE.

The second unit is configured to receive, when the DU serves as the source DU, the handover execution message sent by the CU, send the radio resource information carried in the handover execution message to the UE through the RRC connection reconfiguration message, and instruct the UE to switch.

In the present embodiment,
After receiving the handover request message, the first unit creates the UE instance for the UE and assigns the DU-UE-ID to the UE, and carries in the handover request acknowledgment the DU-UE-ID assigned by the DU.

The above features relates to present embodiment of Fig. 14 are not covered by the claims.

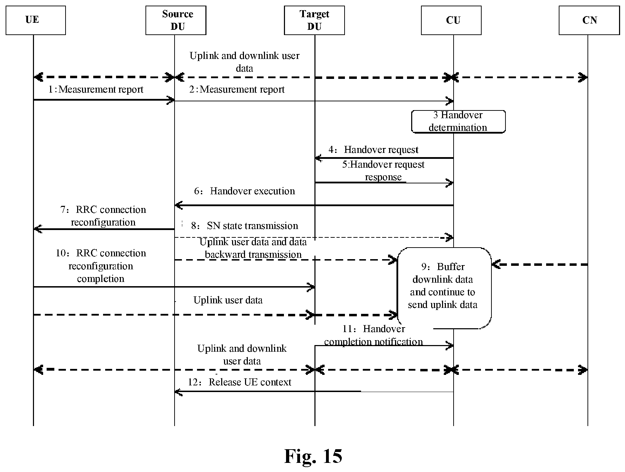

Two examples are given below to illustrate the process that the UE switches between the DUs in the present embodiment. As illustrated in Fig. 15, the process that the UE switches between the different DUs in the same CU comprises the following steps.

At S1, the UE sends a measurement report message to the DU.

At S2, the source DU identifies the measurement report message, and forwards it to the CU.

At S3, the CU performs the handover determination according to a measurement condition, and triggers the UE to switch between the different DUs in the same CU.

At S4, the CU sends the handover request message to the target DU, carrying the ERAB setup list, the security context, the selected security algorithm, the AMBR, and other UE context information.

At S5, the target DU sets up the UE instance and assigns the DU-UE-ID, completes the radio resource admission and tunnel setup, performs the radio resource configuration after the radio resource admission is successful, and sends the handover request acknowledgment to the CU, carrying the CU-DU downlink tunnel node information, the successfully admitted radio resource information and the the successfully admitted ERAB information.

At S6, the CU sends the handover execution message to the source DU, carrying the information of the radio resource successfully admitted by the target DU and the successfully admitted ERAB list.

At S7, the source DU sends the RRC connection reconfiguration message to the UE. The source DU sends the information of the radio resource successfully admitted by the target DU to the UE through the RRC connection reconfiguration message, and instructs the UE to perform handover.

At S8, the source DU sends a Serial Number (SN) state of a GTP/UDP protocol stack (GTP-U) to the CU.

At S9, a user plane anchor point on the CU may not change, so the CU may buffer downlink data and interrupt the sending of downlink data; the sending of uplink data is not interrupted.

At S10, after the target DU receives the RRC connection reconfiguration completion message, the uplink data is sent by the target DU.

At S11, the target DU sends the handover completion notification message to the CU, and the CU a downlink user plane data tunnel to the target DU, and switches CU-UE context information.

At S12, the CU sends a UE context release message to the source DU, and the source DU releases local resources.

In the above process, at S5, the radio resource admission, the protocol stack configuration and other processing are completed by the target DU; at S7 and S10, the RRC connection reconfiguration is completed by the source DU and the UE. If in accordance with the traditional CU-DU separation mode, S6, S7, S10 and S11 are signaling interactions occurring between the CU and the DU. Network transmissions of S7 and S10 are saved at least after optimization, and a handover delay may be reduced.

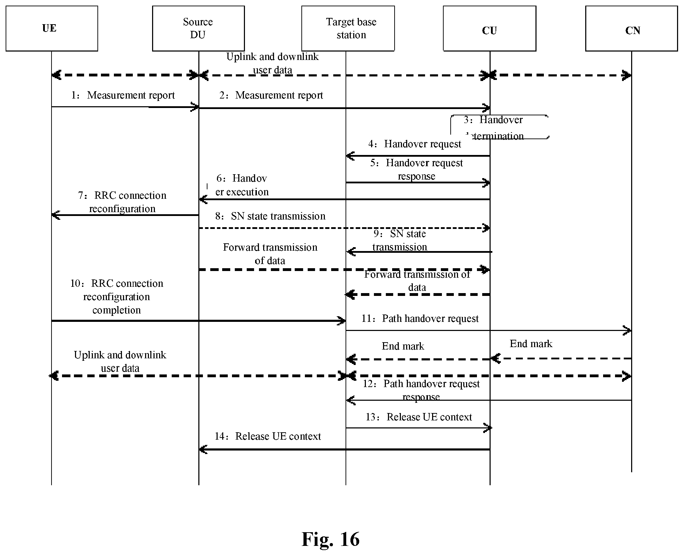

When the UE moves from the DU in the CU to the scope of the external base station, the handover process may happen, and the UE switches to the external base station. As illustrated in Fig. 16, the process that the UE switches from the source DU in the CU to the target DU of the external base station comprises the following steps.

At S1, the UE sends the measurement report message to the DU.

At S2, the source DU identifies the measurement report message, and forwards it to the CU.

At S3, the CU performs the handover determination according to the measurement condition, and triggers the UE to switch to the external base station.

At S4, the CU sends the handover request to the target base station.

At S5, after being ready for handover, the target base station sends the handover request acknowledgment to the CU. The target DU under the target base station will perform the radio resource admission process. The handover request acknowledgment carries the information of the radio resource successfully admitted by the target DU and the successfully admitted ERAB list.

At S6, the CU sends the handover execution message to the source DU, carrying the information of the radio resource successfully admitted by the target DU under the external base station and the successfully admitted ERAB list; and then the source DU starts to execute handover.

At S7, the source DU sends the information of the radio resource successfully admitted by the target DU to the UE through the RRC connection reconfiguration message, and instructs the UE to execute handover.

At S8, the DU sends an SN state transmission message to the CU.

At S9, the DU forwards the SN state to the target base station through the CU.

At S10, the UE sends the RRC connection reconfiguration completion message to the target base station.

At S11, after receiving the RRC connection reconfiguration completion message, the target base station sends a path handover request to the core network, so that the core network points the transmission tunnel node to a target site.

At S12, the core network replies to the target base station that the path handover is completed.

At S13, after the target site completes the handover, the target base station sends the UE context release message to the CU through an Xn/X2 interface.

At S14, the CU sends a UE release instruction to the source DU, and then the DU releases the local resources; the CU releases the local tunnel resources and the UE instance.

The above process lies in that S7 is completing the RRC connection reconfiguration process between the DU and the UE. Compared with the traditional CU-DU separation architecture, the transmission delay of the RRC signaling between the CU and the DU is reduced. The target base station side (comprising the CU and the DU) involved in the above process may refer to the sixth embodiment.

### Sixth embodiment

When the UE moves from the external base station to the scope covered by the CU, a handover of the UE may occur, and the UE switches from the external base station to the inside of the CU. The scenario is the same as that the UE switches from the CU to the external base station in the fifth embodiment, but the present embodiment takes the CU to which the UE will switch as a foothold, so the UE is considered to switch from the external base station to the inside of the CU.

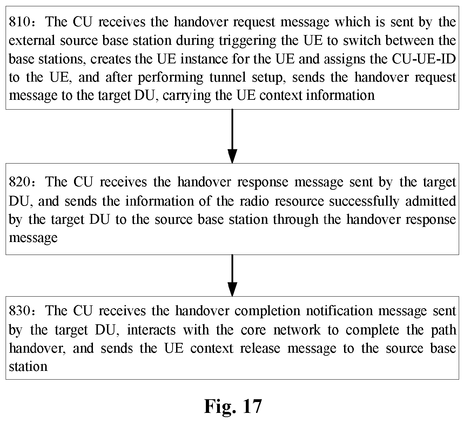

The present embodiment provides a method for the UE to switch, which is applied to the CU side. What is mainly described here is the processing performed for the UE to switch to the UE under the scenario. The processing of the target DU to which the UE will switch is similar to the processing of the target DU in the fifth embodiment. As illustrated in Fig. 17, the method of the present embodiment comprises the following steps. At S810, the CU receives the handover request message which is sent by the external source base station during triggering the UE to switch between the base stations, creates the UE instance for the UE and assigns the CU-UE-ID to the UE, and after performing tunnel setup, sends the handover request message to the target DU, carrying the UE context information. At S820, the CU receives the handover response message sent by the target DU, and sends the information of the radio resource successfully admitted by the target DU to the source base station through the handover response message. At S830, the CU receives the handover completion notification message sent by the target DU, interacts with the core network to complete the path handover, and sends the UE context release message to the source base station.

The present embodiment also provides a CU, comprising the CU-UE control management module. The CU-UE control management module comprises the first unit and the second unit.

The first unit is configured to receive the handover request message which is sent by the external source base station during triggering the UE to switch between the base stations, create the UE instance for the UE and assign the CU-UE-ID to the UE, and after performing tunnel setup, send the handover request message to the target DU, carrying the UE context information. The first unit is further configured to receive the handover response message sent by the target DU, and send the information of the radio resource successfully admitted by the target DU to the source base station through the handover response message.

The second unit is configured to receive the handover completion notification message sent by the target DU, interact with the core network to complete the path handover, and send the UE context release message to the source base station.

An example is given below to illustrate the present embodiment.

The above features relates to present embodiment of Fig. 17 are not covered by the claims.

Taking an Xn/X2 handover for example, the example provides a process that the UE switches from the external base station to the inside of the CU. Compared with the processing of the traditional CU-DU separation architecture, the process is different on an implementation mode, for example, the radio resource admission of the handover under the traditional architecture is performed on the CU, but in the example, it is performed on the DU.

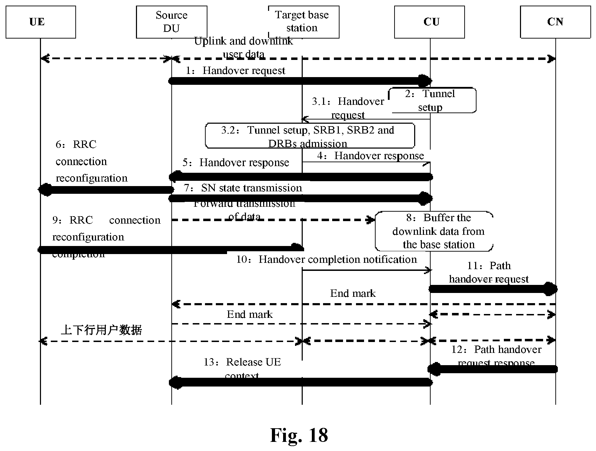

As illustrated in Fig. 18, the example comprises the following steps.

At S1, a source site sends the handover request message to the CU, carrying a target cell ID.

At S2, the CU assigns the CU-UE-ID to the UE and creates the UE instance, distributes core network-CU downlink tunnel node information, the CU-DU uplink tunnel node information and data backward transmission tunnel node information according to an ERAB setup list, and selects the security algorithm according to the UE security capability and saves the security context.

At S3, the CU determines the target DU of handover according to the target cell ID, and sends the handover request message to the target DU, carrying the ERAB setup list and its corresponding tunnel information, security algorithm and security context.

At S4, after completing according to the handover request message the radio resource admission, security activation, transmission resource distribution (namely the distribution of the CU-DU downlink tunnel node information), the protocol stack configuration and other operations, the DU sends the handover response message to the CU, carrying the successfully admitted ERAB list and the CU-DU downlink tunnel node information.

At S5, the CU sends the data backward transmission tunnel node information, the information of the successfully admitted radio resource and the successfully admitted ERAB list to the source base station through the handover request response message.

At S6, the source base station sends the RRC connection reconfiguration message to the UE to instruct the UE to switch.

At S7, the source base station sends the SN state transmission message to the CU, and transmits backward the data to the CU.

At S8, the CU needs to buffer downlink data from the source base station.

At S9, the UE sends the RRC connection reconfiguration completion message to the target DU.

At S10, after receiving the RRC connection reconfiguration completion message, the target DU sends a handover completion notification to the CU.

At S11, the CU sends the path handover request to the core network, and points a downlink tunnel node to a core network-CU downlink tunnel node assigned by the CU before.

At S12, the core network returns the path handover request acknowledgment.

At S13, after receiving the path handover request acknowledgment given by the core network, the CU sends the UE context release message to the source base station, and the source base station releases the UE context and the local resources.

### Seventh embodiment

The present embodiment provides a process that the UE enters an INACTIVE state (also called a suspended state) and exits from the INACTIVE state. The INACTIVE state is different from an IDLE state and a CONNECTED state. Under the state, related scheduling resources are released, but the context information is still kept in each processing unit, so as to be convenient for the UE to restore to the CONNECTED state.

When the UE instance on the CU does not receive any user data within set time, the UE may start the process that the UE enters the INACTIVE state. The core network may or may not sense that the UE enters the INACTIVE state. When needing to perform a data service or receiving a paging message, the UE sends a RRC connection resume request to the DU, so as to start the process that the UE exits from the INACTIVE state.

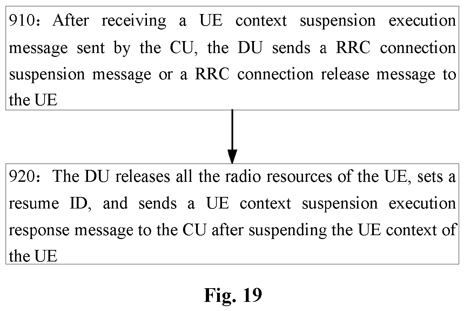

The present embodiment provides a method for UE to enter an INACTIVE state, which is applied to the DU side. As illustrated in Fig. 19, the method comprises the following steps. At S910, after receiving a UE context suspension execution message sent by the CU, the DU sends a RRC connection suspension message or a RRC connection release message to the UE. At S920, the DU releases all the radio resources of the UE, sets a resume ID, and sends a UE context suspension execution response message to the CU after suspending the UE context of the UE.

In the present embodiment,
the step that the DU sets the resume ID comprises that: the DU sets the DU-UE-ID assigned to the UE as the resume ID.

In the present embodiment,
after the DU suspends the UE context of the UE, the method further comprises that: the DU receives an indication message of releasing the UE context of the UE which is sent by the CU, and releases the suspended UE context of the UE on the DU.

The present embodiment also provides a DU, comprising a DU-UE management control module. The DU-UE management control module comprises: a first unit and a second unit.

The first unit is configured to send, after receiving the UE context suspension execution message sent by the CU, the RRC connection suspension message or the RRC connection release message to the UE.

The second unit is configured to release all the radio resources of the UE, set the resume ID, and send the UE context suspension execution message to the CU after suspending the UE context of the UE.

In the present embodiment,
the step that the second unit sets the resume ID comprises that: the second unit sets the DU-UE-ID assigned to the UE as the resume ID.

In the present embodiment,
after the second unit suspends the UE context of the UE, the second unit is further configured to release the suspended UE context of the UE after receiving the indication message of releasing the UE context of the UE which is sent by the CU.

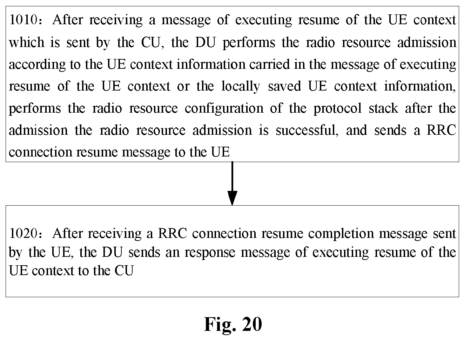

The present embodiment also provides a method for UE to exit from an INACTIVE state. As illustrated in Fig. 20, the method comprises the following steps. At S1010, after receiving a message of executing resume of the UE context which is sent by the CU, the DU performs the radio resource admission according to the UE context information carried in the message of executing resume of the UE context or the locally saved UE context information, performs the radio resource configuration of the protocol stack after the radio resource admission is successful, and sends a RRC connection resume message to the UE. At S1020, after receiving a RRC connection resume completion message sent by the UE, the DU sends an response message of executing resume of the UE context to the CU.

The present embodiment also provides a DU. Refer to Fig. 3, the DU comprises a radio resource management module and a DU-UE management control module.

The radio resource management module is configured to perform radio resource management.

The DU-UE management control module comprises a first unit and a second unit.

The first unit is configured to apply to, after receiving the message of executing resume of the UE context which is sent by the CU, the radio resource management module for the radio resource admission according to the UE context information carried in the message of executing resume of the UE context or the locally saved UE context information, perform the radio resource configuration of the protocol stack after the radio resource admission is successful, and send the RRC connection resume message to the UE.

The second unit is configured to send the response message of executing resume of the UE context to the CU after receiving the RRC connection resume completion message sent by the UE.

Several examples are given below to illustrate the process that the UE enters the INACTIVE state and the process that the UE exits from the INACTIVE state in the present embodiment.

### First example

The present example provides a process that the UE sensed by the core network enters and exits from the INACTIVE state, supporting a process based on a Narrow Band Internet of Things (NB-IOT) standard.

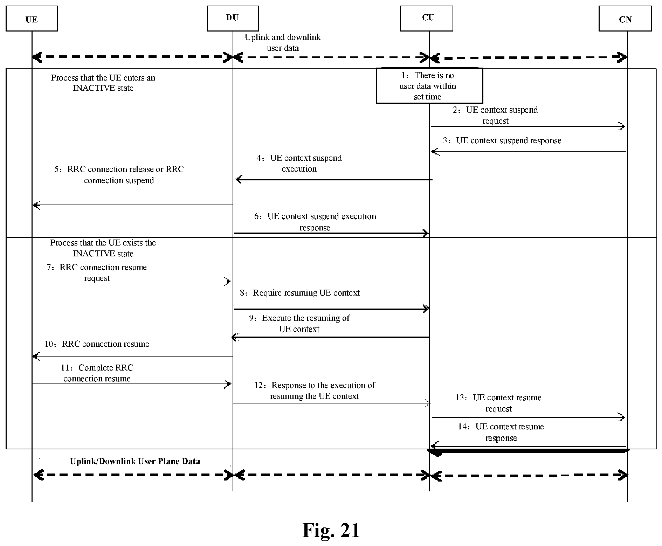

As illustrated in Fig. 21, the example comprises the following steps.

At S1, when the UE instance on the CU does not receive any user data (comprising user plane data and the NAS message) within the set time, the CU starts the process that the UE enters the INACTIVE state.

At S2, the CU sends a UE context suspend request to the core network.

At S3, the core network returns a UE context suspend response.

At S4, after receiving the UE context suspend response, the CU sends a UE context suspension execution message to the DU.

At S5, the DU performs suspension of local resource scheduling, releases all the radio bearer resources after sending a RRC connection suspension message or a RRC connection release message to the UE, sets the resume ID as the CU-UE-ID if it is possible, and sets the UE state of the UE instance on the DU side as INACTIVE, so as to implement the suspension of the UE context.

At S6, the DU sends a UE context suspension execution response message to the CU. After receiving the UE context suspension execution response message, the CU sets the UE instance on the CU side as INACTIVE.

The above is the process that the UE enters the INACTIVE state. The CU in the related art needs to both send the RRC connection suspension message to the UE through the RRC and send an indication of suspension to the DU. The process only needs to send the indication of suspension to the DU, which may save one RRC signaling transmission between the CU and the DU.

At S7, when needing to perform the data service or receiving the paging message (activating the data service of users), the UE sends RRC connection resume request information to the DU.

At S8, the DU sends a message of requiring resuming the UE context to the CU to request the CU to activate the UE context again. The message of requiring resuming the UE context carries the resume ID.

At S9, the CU looks up the suspended UE context according to the resume ID, and sends the message of executing resume of the UE context to the DU, carrying the ERAB setup list and its corresponding CU-DU uplink tunnel node information and the UE context information like the security algorithm, the security context and the AMBR. If the UE entering the INACTIVE state in the DU, the UE may carry the DU-UE-ID instead of carrying the UE context.

At S10, the DU obtains the UE context information through the DU-UE-ID, or obtains the UE context information from the message sent by the CU, applies for both the radio resource (SRBs and DRBs) admission and transmission resources on the DU according to the UE context information (namely performing the tunnel setup and assigning the CU-DU downlink tunnel node). If the radio resource admission is successful and the transmission resource allocation is successful, after completing the radio resource configuration of the local protocol stack, the DU sends RRC connection resume signaling to the UE (in the 5G, the signaling needs to be delivered through a Downlink Dedicated Control Channel (DL DCCH).

If the UE enters the INACTIVE state in the present DU, and the DU saves the UE context information, the processing of requesting the CU to activate the UE context again at S9 and the processing of applying for the radio resource admission and allocating the transmission resource at S10 may be performed in parallel. Or, the processing of applying for the radio resource admission and allocating the transmission resource is first performed, so as to achieve the effect of accelerating the RRC connection resuming process.

At S11, the UE sends the RRC connection resume completion message to the DU.

At S12, after receiving the RRC connection resume completion message of the UE, the DU sends the response message of executing resume of the UE context to the CU, carrying the CU-DU downlink tunnel node information.

At S13, the CU sends the UE context resume request to the core network.

At S14, the core network returns a UE context resume response, and then data link resume is completed.

According the related art, the process of exiting from the INACTIVE state comprises that: the DU sends RRC resume request signaling to the CU; the CU configures the protocol stack to the DU; the DU returns a configuration result; the CU delivers RRC resume signaling; and the DU sends RRC resume completion to the CU. The process of exiting from the INACTIVE state in the example may save at least two times of signaling transmission between networks of the CU and the DU.

### Second example

In some application scenarios, an INACTIVE function of the base station may be configured as after the UE on the DU and the CU enters the INACTIVE state, the UE state of the core network still keeps CONNECTED, that is, the core network has no need to sense. In this case, only the resources related to an air interface are suspended, the resources of transmission links are kept, so a resuming delay is reduced greatly.

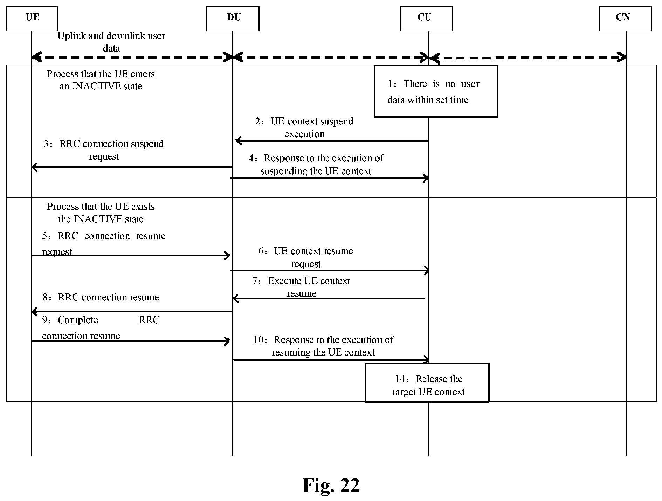

The example provides a process that the UE not sensed by the core network enters the INACTIVE state and exits from the INACTIVE state. As illustrated in Fig. 22, the process comprises the following steps.

At S1, when the UE instance on the CU does not receive any user data (comprising user plane data and the NAS message) within the set time, the CU starts the process that the UE enters the INACTIVE state.

At S2, the CU sends the UE context suspension execution message to the DU.

At S3, after receiving the UE context suspension execution message, the DU performs the suspension of local resource scheduling, releases all the radio bearer resources after sending a RRC connection suspension message or a RRC connection release message to the UE, and sets the resume ID as the CU-UE-ID if it is possible; the UE instance on the DU side enters the INACTIVE state.

At S4, the DU sends the UE context suspension execution response message to the CU. After receiving the UE context suspension execution response message, the CU sets the UE instance on the CU side as the INACTIVE state. In order to maintain the normal use of downlink user data and the fast resume of the transmission link, the tunnel information on the CU needs to remain available.

At S5, when needing to perform the data service or receiving the paging message (activating the data service of users), the UE sends the RRC connection resume request information to the DU, and then the process of exiting the INACTIVE state is initiated.

At S6, the DU sends the UE context resume request message (also called the message of requiring resuming the UE context) to the CU, carrying the resume ID.

At S7, the CU looks up the suspended UE context according to the resume ID, and sends a UE context resume execution message (also called the message of executing resume of the UE context) to the DU, carrying the ERAB setup list and its corresponding CU-DU uplink tunnel node information and the UE context information like the security algorithm, the security context and the AMBR. If the UE enters the INACTIVE state in the present DU, the UE may carry the DU-UE-ID instead of carrying the UE context.

At S8, the DU obtains the UE context information through the DU-UE-ID, or obtains the UE context information from the message sent by the CU, performs the radio resource (SRBs and DRBs) admission and allocates the transmission resources (the CU-DU downlink tunnel node information) on the DU according to the UE context information, and sends the RRC connection resume message to the UE after succeeding in that.

If the UE enters the INACTIVE state in the present DU, the processing of applying for the radio resource admission and allocating the transmission resource and the processing of requesting the CU to activate the UE context again may be performed in parallel or at first, thereby achieving the effect of accelerating the RRC connection resuming process.

At S9, the UE sends the RRC connection resume completion message to the DU.

At S10, after receiving the RRC connection resume completion message of the UE, the DU sends the acknowledgment message of executing resume of the UE context (the CU-DU downlink tunnel node information) to the CU.

At S11, if the DU is the target DU instead of the source DU of the RRC connection resume, the CU needs to notify the source DU to release the UE context.

Compared with the traditional CU-DU separation architecture, in the process of entering the INACTIVE state, the present example may save one RRC signaling transmission between the CU and the DU; in the process of exiting from the INACTIVE state, excepting saving several times of RRC signaling interactions between the CU and the DU, if the UE enters and exits from the IDLE state under the same DU, the present example accelerates the process of resuming the RRC connection by means of the UE context information buffered on the DU.

### Third example

The UE may enter the INACTIVE state in the CU, but may enter the scope covered by other base stations with the movement, so the process of resuming the RRC connection may happen.

The present example provides a process that the UE enters the INACTIVE state in the CU and exits from the INACTIVE state in the external base station. Under the traditional CU-DU separation architecture, after the UE enters the INACTIVE state, the UE context on the DU may be released completely. But in the present example, due to considering that the UE may resume the RRC connection under the same DU, in order to accelerate the process of this case, the UE context of the DU is not released, so after the external base station resumes the RRC connection, the CU needs to instruct the DU to release the UE context except releasing its own UE context.

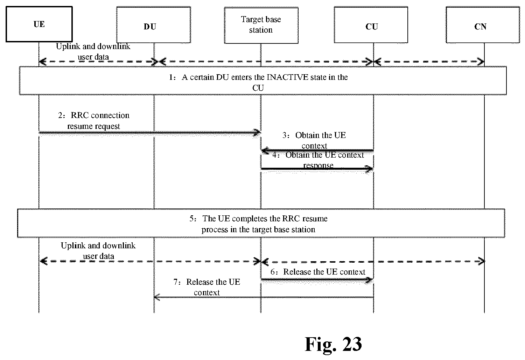

As illustrated in Fig. 23, the example comprises the following steps.

At S1, the UE enters the INACTIVE state under the CU. The detailed process is described in above example.

At S2, the UE initiates the process of resuming the RRC connection under the target base station.

At S3, the target base station obtains the UE context information through the source CU.

At S4, the CU returns the UE context information to the target base station.

At S5, the UE completes the resuming of the RRC connection and the user plane path handover on the target base station.

At S6, after the resuming of the RRC connection is completed, the target base station sends UE context release signaling to the CU, so as to instruct the source CU to release the UE context.

At S7, after receiving the UE context release message, the CU notifies the DU to release the suspended UE context and the UE context on the CU.

### Eighth embodiment

The present embodiment relates to splitting configuration of the user plane protocol stack on the CU and the DU. The user plane may be based on splitting methods, such as option1, option2 and option3, in the standard protocol.

### Herein,

Option1: if the option1 is selected, the PDCP and below are processed on the DU, and a CU user plane only needs to forward the user data.

Option2: if the option2 is selected, the PDCP is processed on the CU, and other user plane protocol stacks are processed on the DU, which is the most mainstream splitting mode. Then, the CU-UE control management module needs to configure a PDCP instance on the CU according to the ERAB information; for example, a parameter of the PDCP may be decided according to the purpose of QoS class identifier (QCI).

Option3: if the option3 is selected, the RLC and the PDCP are processed on the CU, and the other user plane protocol stacks are processed on the DU.

In the present embodiment, if the option1 is adopted, the DU performs the configuration of all the user plane protocol stacks like the PDCP and the RLC. If the option2 is adopted, the CU performs the configuration of a PDCP protocol layer, and the DU performs the configuration of the user plane protocol stacks of the RLC and below. If the option3 is adopted, the CU performs the configuration of the RLC and PDCP protocol stacks, and the DU performs the configuration of the user plane protocol stacks below the RLC.

Those of ordinary skill in the art may understand that all or some of the steps in the above method disclosed, the system, the functional modules/units in the device may be implemented as software, firmware, hardware and a proper combination of them. In an implementation of hardware, the division among the functional modules/units mentioned in the above description does not necessarily correspond to the division of physical units; for example, a physical component may have multiple functions, or a function or step may be performed by several physical components in coordination. Some or all of the physical components may be implemented as software performed by a processor, for example, a central processing unit, a digital signal processor or a microprocessor, or implemented as hardware, or implemented as an integrated circuit, for example, an application-specific integrated circuit. Such software may be distributed on computer readable media. The computer readable media may comprise computer storage media (or non-temporary media) and communication media (or temporary media). As those of ordinary skill in the art know, the term computer storage media comprise volatile and non-volatile media, and removable and un-removable media which are implemented in any method or technology for storing information (such as a computer readable instruction, a data structure, a program module or other data). The computer storage media comprise, but not limited to, an RAM, an ROM, an EEPROM, a flash memory or other memory technologies, a CD-ROM, a Digital Video Disk (DVD) or other optical storage, a cartridge, a tape, a disk storage or other magnetic storage devices, or any other media which may be used for storing expected information and may be accessed by a computer. Moreover, as those of ordinary skill in the art know, the communication media generally comprise the computer readable instruction, the data structure, the program module or other data, such as carriers or other transmission mechanisms, in a modulation data signal, and may comprise any information delivery media.

### Industrial Applicability

As described above, a communication method under a wireless base station separation architecture, a functional entity and a wireless base station provided by the embodiments of the present disclosure have the beneficial effect of reducing a processing delay of a UE control plane process better.

## Claims

1. A communication method under a wireless base station separation architecture, comprises:
Receiving (110), by a Distributed Unit, DU, provided with all control panel protocol stacks of an air interface, a Radio Resource Control, RRC, message sent by User Equipment, UE;
decoding and identifying (120), by the DU, the RRC message;
terminating a RRC protocol on the DU, the method further **characterized by**:
assigning, by the DU, a DU-side UE Identifier, DU-UE-ID, to an accessing UE, creating, by the DU, a UE instance on the DU, and managing, by the DU, a UE state and UE context information, wherein
after assigning, by the DU, the DU-UE-ID to the accessing UE, the method further comprises:
carrying, by the DU, the DU-UE-ID in a message sent to a Centralized Unit, CU, obtaining, by the DU, a CU-side UE Identifier CU-UE-ID, which is assigned to the UE by the CU, from a message sent by the CU, and carrying, by the DU, the DU-UE-ID and the CU-UE-ID in all messages subsequently sent to the CU.

2. The method as claimed in claim 1, wherein
after decoding and identifying (120), by the DU, the RRC message, the method further comprises:
in response to identifying that the RRC message sent by the UE is a RRC message requesting for establishing a RRC connection, executing, by the DU, RRC connection control, and interacting, by the DU, with the UE to complete a RRC connection establishing process.

3. The method as claimed in claim 1, wherein
after decoding and identifying (120), by the DU, the RRC message, the method further comprises:
in response to identifying that the RRC message sent by the UE is a RRC message carrying a measurement report or a Non-Access Stratum, NAS, message, forwarding, by the DU, the measurement report or the NAS message to a Centralized Unit, CU.

4. The method as claimed in claim 1,
further comprises:
performing, by the DU, radio resource admission for an accessing UE according to managed radio resources, and completing, by the DU, radio resource configuration of a control plane protocol stack after the radio resource admission is successful.

## Patentansprüche

1. Kommunikationsverfahren unter Verwendung einer drahtlosen Basisstationstrennungsarchitektur, das Folgendes umfasst:
Empfangen (110) durch eine verteilte Einheit, DU, die mit allen Bedienfeldprotokollstapeln einer Luftschnittstelle ausgestattet ist, einer Radio-Resource-Control, RRC-Nachricht, die von dem Benutzergerät, UE, gesendet wird;
Dekodieren und Identifizieren (120) durch die DU der RRC-Nachricht;
Beenden eines RRC-Protokolls an der DU, wobei das Verfahren ferner **gekennzeichnet ist durch**:
Zuweisen **durch** die DU einer DU-seitigen UE-Kennung, DU-UE-ID, an ein zugreifendes UE, Anlegen **durch** die DU einer UE-Instanz an der DU, und Verwalten **durch** die DU eines UE-Zustands und von UE-Kontextinformationen, wobei
nach dem Zuweisen **durch** die DU der DU-UE-ID an das zugreifende UE das Verfahren ferner Folgendes umfasst:
Tragen **durch** die DU, der DU-UE-ID in einer Nachricht, die an eine Zentraleinheit Einheit, CU, gesendet wird, Erhalten **durch** die DU einer CU-seitigen UE-Kennung, CU-UE-ID, die dem UE **durch** die CU zugewiesen wird, aus einer Nachricht, die von der CU gesendet wird, und Tragen **durch** die DU der DU-UE-ID und der CU-UE-ID in allen Nachrichten, die anschließend an die CU gesendet werden.

2. Verfahren nach Anspruch 1, wobei
nach dem Dekodieren und Identifizieren (120) durch die DU der RRC-Nachricht das Verfahren ferner Folgendes umfasst:
als Reaktion auf das Identifizieren, dass die RRC-Nachricht, die von der UE gesendet wird, eine RRC-Nachricht ist, die das Herstellen einer RRC-Verbindung anfordert, Ausführen durch die DU einer RRC-Verbindungssteuerung und Interagieren durch die DU mit der UE, um einen RRC-Verbindungsherstellungsprozess abzuschließen.

3. Verfahren nach Anspruch 1, wobei
nach dem Dekodieren und Identifizieren (120) durch die DU der RRC-Nachricht das Verfahren ferner Folgendes umfasst:
als Reaktion auf das Identifizieren, dass die RRC-Nachricht, die von der UE gesendet wird, eine RRC-Nachricht ist, die einen Messbericht oder eine Non-Access-Stratum , NAS-Nachricht, trägt, Weiterreichen durch die DU des Messberichts oder der NAS-Nachricht an eine Zentraleinheit Einheit, CU.

4. Verfahren nach Anspruch 1,
dass ferner Folgendes umfasst:
Durchführen der Funkressourcen-Zulassung für ein zugreifendes UE durch die DU gemäß verwalteten Funkressourcen, und Abschließen der Funkressourcen-Konfiguration eines Steuerebenen-Protokollstapels durch die DU, nachdem die Funkressourcen-Zulassung erfolgreich war.

## Revendications

1. Procédé de communication sous architecture de séparation de station de base sans fil, comprenant :
la réception (110), par une unité distribuée, DU, comportant toutes les piles de protocoles de tableau de commande d'une interface aérienne, d'un message de commande de ressource radio, RRC, envoyé par un équipement d'utilisateur, UE ;
le décodage et l'identification (120), par la DU, du message de RRC ;
la terminaison d'un protocole de RRC sur la DU, le procédé étant en outre **caractérisé par** :
l'attribution, par la DU, d'un identifiant d'UE côté DU, DU-UE-ID, à un UE d'accès, la création, par la DU, d'une instance d'UE sur la DU et la gestion, par la DU, d'un état d'UE et d'informations de contexte d'UE, dans lequel,
après attribution, par la DU, du DU-UE-ID à l'UE d'accès, le procédé comprend en outre :
le transport, par la DU, du DU-UE-ID dans un message envoyé à une unité centralisée, CU, l'obtention, par la DU, d'un identifiant d'UE côté CU, CU-UE-ID, qui est attribué à l'UE par la CU, à partir d'un message envoyé par la CU, et le transport, par la DU, du DU-UE-ID et du CU-UE-ID dans tous les messages envoyés ensuite à la CU.

2. Procédé selon la revendication 1, dans lequel
après décodage et identification (120), par la DU, du message de RRC, le procédé comprend en outre :
en réponse à l'identification du fait que le message de RRC envoyé par l'UE est un message de RRC demandant l'établissement d'une connexion de RRC, l'exécution, par la DU, d'une commande de connexion de RRC et l'interaction, par la DU, avec l'UE pour terminer un processus d'établissement de connexion de RRC.

3. Procédé selon la revendication 1, dans lequel
après décodage et identification (120), par la DU, du message de RRC, le procédé comprend en outre :
en réponse à l'identification du fait que le message de RRC envoyé par l'UE est un message de RRC transportant un rapport de mesure ou un message de strate de non-accès, NAS, le transfert, par la DU, du rapport de mesure ou du message de NAS à une unité centralisée, CU.

4. Procédé selon la revendication 1,
comprenant en outre :
la réalisation, par la DU, d'une admission de ressources radio pour un UE d'accès selon des ressources radio gérées et l'achèvement, par la DU, d'une configuration de ressources radio d'une pile de protocoles de plan de commande après le succès d'admission de ressources radio.
